(19)

**Europäisches Patentamt**

**European Patent Office**

**Office européen des brevets**

(11)  **EP 1 909 075 A2**

(12)  **EUROPEAN PATENT APPLICATION**

(43) Date of publication:
**09.04.2008 Bulletin 2008/15**

(51) Int Cl.:
*G01D 5/347* (2006.01)

(21) Application number: **07117600.2**

(22) Date of filing: **01.10.2007**

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK RS**

(30) Priority: **04.10.2006 US 828102 P**

(71) Applicant: **CSEM
Centre Suisse d'Electronique et de
Microtechnique SA
2002 Neuchâtel (CH)**

(72) Inventors:
• **Seitz, Peter
8902, Urdorf (CH)**
• **Lustenberger, Felix
6330, Cham (CH)**

(74) Representative: **Schneider Feldmann AG
Patent- und Markenanwälte
Beethovenstrasse 49
Postfach 2792
8022 Zürich (CH)**

(54)  **Spatial Correlation Photo Sensor**

(57)    An incident electromagnetic wave-field, preferably in the ultraviolet, visible or infrared spectral range, that is spatially varying in one dimension can be correlated with a fixed, one-dimensional test function, by means of a photo detector consisting of a multitude of rectangular photosensitive elements whose relative lateral widths vary in proportion to the local amplitude of the test function. Several such spatial correlation tracks for different test functions can be arranged in the direction perpendicular to the width modulation direction. Each correlation track provides the degree of correlation of the incident wave-field with a particular test function, by determining the correlation of these two signals in the optical domain, without the need for an additional analog or digital processor. This invention is particularly advantageous for application in optical encoders for the determination of lateral or rotational spatial displacement.

## Fig. 3

(a)

## Description

## Technical Field

The present invention relates to photo sensor devices for correlating an incident electromagnetic wave-field, particularly light in the ultraviolet, visible and/or infrared spectral range, along a correlation axis with at least one test function, comprising a photosensitive element to detect said electromagnetic wave-field.

## State of the Art

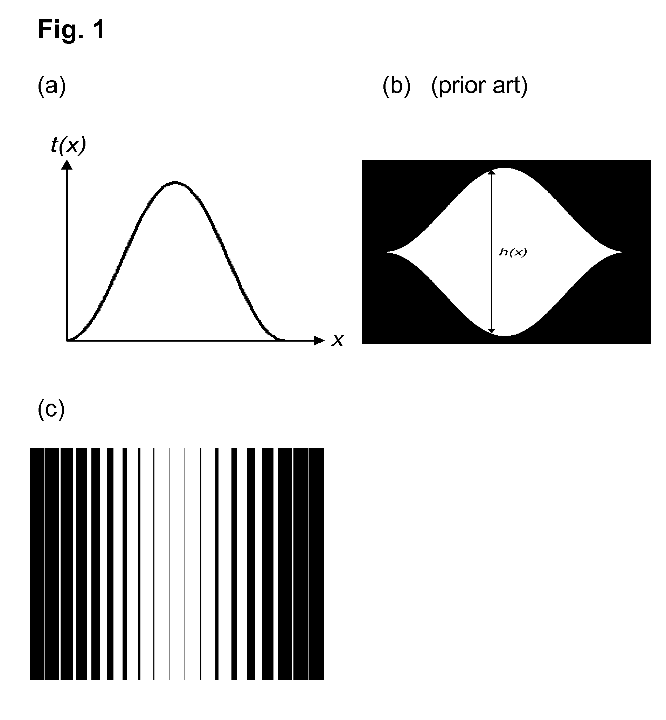

In optical encoders a lateral or rotational displacement is determined by correlating the periodic pattern on a ruler with harmonic functions of the same period. A conventional way of correlating an incident electromagnetic wave-field or a projected image with a specific test function is the detection of the electromagnetic wave-field with a one- or two-dimensional photo sensor, consisting of a multitude of individual photosensitive elements, so-called pixels, and to subsequently correlate the acquired data with the test function, using an external digital processor. Such an approach is described for example in US 5,602,932. As long as the dimensions of the pixels are small compared to the distances over which the incident wave-field is varying, this is a viable solution, although there is the necessity of transforming the pixel values first into digital values and the utilization of a digital signal processor with its associated electronics for the necessary calculations. However, in optical systems requiring such correlations at very low expense, such a solution is not favourable in view of complexity and costs. CH 690971 teaches the realization of a one-dimensional spatial-correlation photo sensor entirely made of a semiconductor material, as for example silicon. It consists of a photosensitive area whose height $h(x)$, perpendicular to the spatial dimension in which the correlation shall be carried out as a function of the spatial position x, is proportional to the value $t(x)$ of a one-dimensional test function with which the incident wave-field $w(x)$ should be correlated. An example of such a test function $t(x)$ is illustrated in Figure 1(a), and the corresponding photo sensor with position-dependent height $h(x)$ is shown in Figure 1(b). Due to the linear relationship between incident radiation and resulting number of photo-generated charge carriers in a semiconductor, the resulting output signal s of such a photo sensor is proportional to

$$ s = \int_{a}^{b} t(x)\, w(x)\, dx \, , $$

which is exactly the required correlation or convolution value.

If several such correlation tracks are placed one below the other, in order to produce several correlation results with different, fixed test functions simultaneously, there is wasted space between the tracks due to the height modulation. In addition, the photo sensor shapes required in practice are not the rectangular shapes normally encountered in semiconductor industry, and problems may occur in fabricating such sensors.

This can be overcome, in principle, with the method described in US 3,836,254, in which the test functions are realized as lateral, spatially dispersed patterns of opaque and transparent regions on a rotating mask. The incident wave-field is impinging on this mask pattern, is partially transmitted, thereby carrying out the multiplications of the convolution operation, collected by a lens and focused on a single photo sensor. An electronic integrator circuit carries out the integration, as required in the convolution equation above. This method uses rotating parts, and it is thus complex and expensive.

US 5,521,395 teaches the realization of a simple correlation photo detector for a special class of periodic, oriented wave-fields. Said detector is made of a semiconductor material such as silicon, and consists of a periodic arrangement of opaque and transparent slits in front of a photodiode. Such an optical correlator apparatus is restricted, however, to strictly periodic test functions.

## Summary of the Invention

It is an object of the present invention to provide a spatial correlation photo sensor device for the correlation of an incident one-dimensional wave-field, preferably in the ultraviolet, visible or infrared spectral range, without the disadvantages of the prior art discussed above. Particularly, a photo sensor device according to the invention should allow the generic correlation or convolution of an incident one-dimensional wave-field with a multitude of general, fixed test functions. Furthermore, such photo sensor devices should be producible with semiconductor materials, in particular with, but not limited to, industry-standard silicon fabrication processes such as CMOS (complementary metal oxide semiconductor), BiCMOS (Bipolar CMOS) and SiGe (silicon germanium) technology. A further object of invention is to provide such correlation photo sensors devices that are extremely sensitive to incident light, so that they are capable of carrying out the convolution or correlation with a minimum amount of impinging light energy.

These and other problems are solved by the device according to the present invention as defined in claim 1. Advantageous embodiments are described in the dependent claims.

The correlation photo sensor device according to the present invention overcomes the state of the art in several respects. It can be fabricated with any photosensitive semiconductor, in particular with industry standard silicon processes. It consists only of rectangular structures, and it is therefore completely compatible with all photomask and photolithography methods utilized in semiconductor technology. It can provide the correlation or convolution with any type of one-dimensional test function, as long as the values of the test function remain finite. It can carry out the convolution or correlation of an incident wave-field with several different, fixed test functions simultaneously. Finally, it does not require any moving parts, nor any additional optical elements or electronic circuits.

A spatial correlation photo sensor device according to the invention comprises a multitude of rectangular photosensitive elements whose relative lateral widths vary in proportion to the amplitude of the test function. Several such spatial correlation tracks for different test functions can be arranged in the direction perpendicular to the width modulation direction. Each correlation track provides the degree of correlation of the incident wave-field with a particular test function, by determining the convolution of these two signals in the optical domain, without the need for an additional analog and/or digital signal-processing unit. Such spatial correlation photo sensor devices according to the invention are particularly advantageous for the application in optical encoders for the determination of lateral or rotational displacement.

**Brief Description of the Drawings**

Figure 1 illustrates the principle of a spatial correlation photo sensor device according to the invention in comparison to a prior art device. Figure 1(a) shows an example of a one-dimensional test-function with position-dependent value $t(x)$. Figure 1(b) shows a top view of a correlation photo sensor according to the prior art, consisting of a photosensitive area (white), whose height $h(x)$ is proportional to the test function $t(x)$.

Figure 1(c) shows a top view of a correlation photo sensor device according to the present invention, consisting of a multitude of rectangular elements, which have a mean local width that is proportional to the test function $t(x)$. Black indicates opaque parts; white indicates transparent, photosensitive parts.

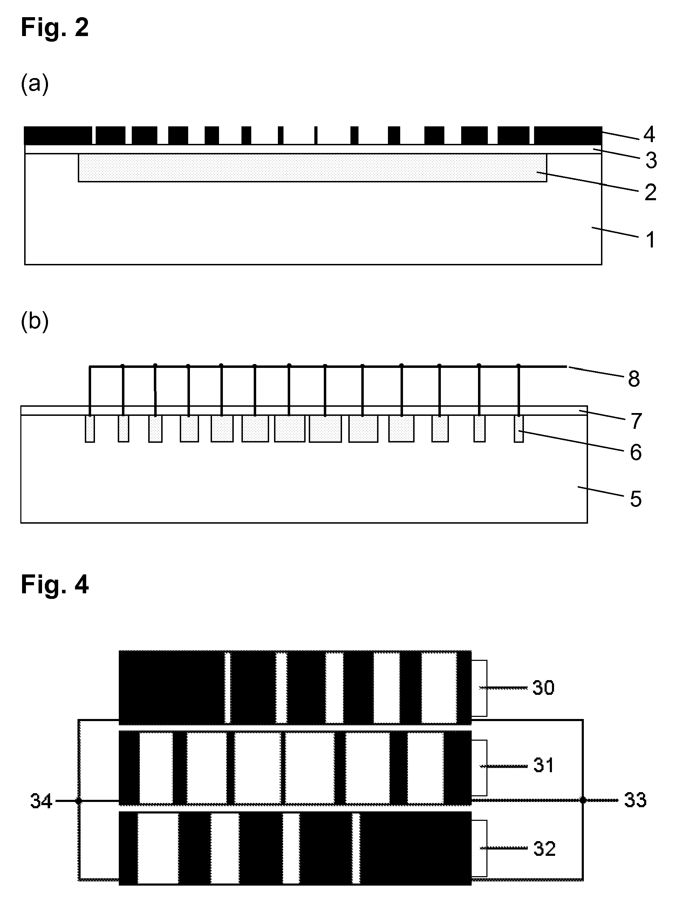

Figure 2 shows schematic cross sections of two possible embodiments of spatial-correlation photo sensor devices according to the invention, realized with photodiodes. In the embodiment of Figure 2(a) one photodiode with an insulating transparent layer is employed, on top of which an opaque layer with lateral openings is placed, whose averaged width is proportional to the local amplitude of the correlation function. In the embodiment of Figure 2(b) several separate photodiodes are employed, with an averaged effective width that is proportional to the local amplitude of the correlation function. The photodiodes must be electrically connected, for example with a conducting line to which all photodiodes have electrical contact.

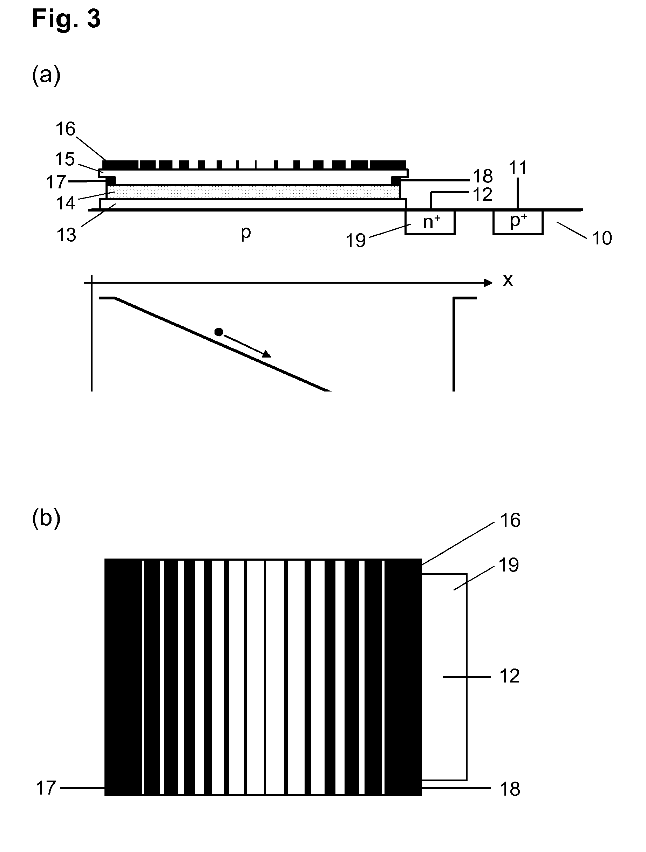

Figure 3 shows an embodiment of a spatial-correlation photo sensor device according to the invention, making use of a lateral electric drift field. In this way, the tasks of creating photo-charges and accumulating photo-charges are separated, leading to correlation photo sensors that exhibit a very low noise level, and that are, as a result, very sensitive. Figure 3(a) discloses a cross section of the device (upper part), and schematically shows the lateral distribution of the electrical potential at the semiconductor-insulator interface. Figure 3(b) shows a top view of the same device, illustrating the laterally modulated opaque mask (black) and the transparent openings (white).

Figure 4 shows an embodiment of a spatial-correlation photo sensor device according to the invention with a plurality of correlation photo sensor tracks arranged adjacent to each other in the direction perpendicular to the direction of the width modulation. In this way, several correlation values can be determined simultaneously. In the shown example three tracks according to Figure 3 are used, having common electrodes for the generation of the electrical fields and separate contacts for reading out the individual tracks.

**Ways to implement the Invention**

The present invention makes use of semiconductor material such as silicon for the conversion of incident photons into electron-hole pairs. These photo-generated charge carriers must be collected in an electric field, which is either created with a photodiode structure, consisting of a volume of semiconductor material whose type of doping is opposite from the doping type of the substrate, or with an MOS structure, consisting of an isolation layer on top of which an electrode is placed. In both cases, a depletion region is created whose width is dependent on the voltage - with respect to the substrate potential - that is applied either to the doped volume (in case of a photodiode), or to the top electrode (in case of an MOS structure). Photo-generated charge-carrier pairs are separated in the electric field of the depletion zone, and they can be stored in the capacitance formed by the depletion zone at the separation layer between two electrically conducting elements.

In known photo sensor devices capable of carrying out correlation operations in the optoelectronic domain, the height of the pixel $h(x)$ is modulated proportionally to the test function $t(x)$, as it is illustrated in Figure 1(a). A top view of a correlation photo sensor according to the prior art is shown in Figure 1(b), consisting of a photosensitive area (white), whose height $h(x)$ is proportional to the test function $t(x)$. The width of these prior-art photo sensors is constant.

In contrast to the prior art, the height of a photo sensor device according to the invention is constant, and the complete device consists of a large number of, rectangular photosensitive areas (white), as illustrated in Figure 1(c). The averaged width of these rectangles is proportional to the local value of the correlation test function $t(x)$. For that purpose the correlation test function has to vary slowly in comparison with the minimum possible width of the photosensitive elements. Since modern deep-submicron semiconductor technology allows the realization of structures such as openings in metal layers as small as a few tens of nanometers, the correlation function can have significant variations on the scale of a few tens of micrometers.

A first embodiment of a laterally modulated correlation photo sensor device according to the invention is disclosed in Figure 2(a). It makes use of a photosensitive element that accumulates and stores photo-generated charge carriers, and which is electrically contiguous. The disclosed embodiment uses a photodiode as a photosensitive element.

In a semiconductor substrate 1 of a first conduction type, a shallow region 2 of the opposite conduction type with a thickness of 10 nm to 10 $\mu$m is fabricated, thus forming a photodiode. An electrically insulating layer 3, such as $SiO_2$ or $Si_3N_4$, covers the semiconductor substrate. An optically opaque layer 4 such as metal, particularly Aluminum, covers the insulator 3. The layer has rectangular openings whose averaged width is proportional to the correlation function. The resulting laterally modulated mask 4 provides an averaged local light intensity on the photodiode 2,1 corresponding to the test function $t(x)$.

A second embodiment of a laterally modulated correlation photo sensor device according to the invention is disclosed in Figure 2(b), and makes use of a multitude of individual photosensitive elements, whose averaged effective width is proportional to the corresponding amplitude of the correlation function. The individual photosensitive elements must be electrically connected, for example with a conducting line 8. In the example of Figure 2(b) this is achieved with a semiconductor substrate 5 of a first conduction type, into which several shallow regions 6 of the opposite conduction type with a thickness of 10 nm to 10 $\mu$m are fabricated, thus forming a plurality of photodiodes. The width of theses photodiodes is laterally modulated such that the average local width corresponds to the test function $t(x)$. The device is covered with an insulation layer 7 protecting it electrically, chemically and mechanically from adverse outside influences. All photodiodes are electrically connected with a conduction line 8, which is either placed on the top of the device or at the side of it.

In both cases, the effective electrical capacitance is given by the sum of the individual capacitances of all components, and it is therefore linearly dependent on the electrically active surface. It is known that the noise that limits the performance of a photo sensor is proportional to the effective capacitance at the input of the first transistor, as described for example in P. Seitz, "Solid-State Image Sensing", in Computer Vision and Applications - A Guide for Students and Practitioners (B. Jähne and H. Haussecker, Eds.), pp. 111-152, Academic Press, San Diego, 2000. This implies that the larger the photo sensor, the larger is its capacitance, and the higher is the charge noise that corrupts the signal, consisting of a certain number of photo charges.

This limit is overcome by another, third embodiment of a photo sensor device according to the invention, in which a MOS structure is used as the photosensitive element, and by making use of a lateral electrical field that separates the tasks of generating charge carriers generated by incident photons, and of accumulating these photo-generated charge carriers, as described for example in EP 1624490 A1.

The MOS structure of such an embodiment of a device according to the invention consists of a substrate 10 of a selected electrical conduction type, on top of which an isolation layer 13 is placed, capped with a high-resistivity electrode 14, which is biased to a positive potential in the case of a p-doped substrate 10, or biased to a negative potential in the case of an n-doped substrate 10.

In the example shown in Figure 3, a p-doped substrate 10 is electrically connected to a p+ diffusion 11. On top of the substrate 10 a transparent insulator 13 is placed, with a thickness of 1 nm to 10 $\mu$m. This insulator 13 is covered with an electrically highly resistive transparent electrode 14, which has electrical connections 17 and 18 at opposite ends. A positive voltage difference between the two electrodes 18 and 17 creates a small current from contact 18 to contact 17, which in turn creates a linear potential drop at the surface of the semiconductor substrate 10, as illustrated in the lower part of Figure 3(a). Photo-generated charge carriers are rapidly swept to one side of the device, where they are accumulated and stored, either in an n+ diffusion 19, which is electrically connected through the contact 12, or, alternatively, under the gate of an MOS structure. The effective capacitance of the accumulation/storage structure 19 can therefore be very small, and, consequently, the correlation photo sensor device exhibits very small charge noise, being very sensitive as a result. The correlation functionality is realized by covering the device with an insulator 15, on top of which an opaque layer 16 is fabricated, which has laterally width-modulated rectangular openings as described above and acts as a mask.

Since the height of the rectangular photosensitive elements is not prescribed, it is possible to create several tracks of photosensitive elements at the same time, arranged adjacent to each other in the direction perpendicular to the direction of the width modulation, as illustrated in Figure 4 for an embodiment with three tracks. Each of the tracks is capable of carrying out the correlation of the incident one-dimensional wave-field with a separate correlation test function, and all tracks carry out their correlation tasks simultaneously. In the example shown in Figure 4, the three tracks are electrically connected using the above-described method for creating lateral electrical fields, as shown in Figure 3. All electrical contacts to the transparent high-resistivity layer are electrically connected to the same electrical connections 33 and 34 at both sides of the devices. As described above, a positive voltage applied between the electrodes 34 and 33 leads to a lateral electrical field under the different tracks, sweeping the photo-generated electrons to the charge accumulation/storage diffusions that are individually read out for each correlation function track with separate electrical contacts 30, 31 and 32.

Another possible embodiment combines the arrangements according to the previously described embodiments with the amplitude modulation of the photosensitive track according to the photo sensor devices described in CH 690971 A5. This additional modulation $h(x)$ can further enhance the effectively observed resolution of the test function $t(x)$, and hence increases the applicability of the photo sensor devices to further high-resolution applications in optical linear and rotational encoders way beyond what has been possible with prior applications according to CH 690971 A5 and similar.

**List of Reference Symbols**

| | |
|---|---|
| 1 | semiconductor substrate of first conduction type |
| 2 | shallow region of second, opposite conduction type |
| 3 | electrically insulating layer |
| 4 | opaque layer / mask |
| 5 | semiconductor substrate of first conduction type |
| 6 | shallow region of second, opposite conduction type |
| 7 | electrically insulating layer |
| 8 | electrical connection |
| 10 | semiconductor substrate of p conduction type |
| 11 | p+ diffusion |
| 12 | electrical contact |
| 13 | transparent insulator |
| 14 | transparent electrode with high resistance |
| 15 | electrically insulating layer |
| 16 | opaque layer / mask |
| 17, 18 | electrical connection |
| 19 | n+ diffusion |
| 30, 31, 32 | electrical connection to storage diffusion |
| 33 | electrical connection |
| 34 | electrical connection |

**Claims**

1. A photo sensor device for correlating an incident electromagnetic wave-field, particularly light in the ultraviolet, visible and/or infrared spectral range, along a correlation axis with at least one test function, comprising a photosensitive element to detect said electromagnetic wave-field, **characterised in that** the photo sensor device comprises means to reduce the amount of light detectable by the photosensitive element at a certain position of the correlation axis to a value proportional to the respective amplitude of said test function at this position, wherein the amount of reduction of said means is a result of the lateral width of said means in the direction of the correlation axis.

2. The photo sensor device according to claim 1, **characterised in that** the photosensitive element is a photodiode or a MOS structure.

3. The photo sensor device according to claim 1 or 2, **characterised in that** the means to reduce the amount of light detectable by the photosensitive element is a multitude of rectangular opaque mask elements (4, 16) arranged on top of the photosensitive element, the average width of the lateral openings between said mask elements at an axial position being proportional to the respective amplitude of said test function at this position.

4. The photo sensor device according to claim 3, **characterised in that** the photosensitive element is a photodiode and consists of a doped region (2) of one conduction type realized in a substrate (1) of another conduction type opposite to said first one, a transparent insulating layer (3) covering said photodiode, and mask elements (4) of an optically opaque material arranged on top of said insulating layer (3), provided with lateral openings, the average width of which is proportional to the corresponding amplitude of said test function.

5. The photo sensor device according to claim 1 or 2, **characterised in that** the means to reduce the amount of light detectable by the photosensitive element is a multitude of interruptions in the photosensitive element in the lateral axis direction, resulting in a photosensitive element consisting of a multitude of electrically connected rectangular sub-elements (6), the average effective width of which is proportional to the corresponding amplitude of the test function.

6. A photo sensor device comprising two or more photo sensor devices according to any of the preceding claims with different test functions, arranged in parallel.

# Fig. 1

(a)

(b)   (prior art)

(c)

# Fig. 2

(a)

(b)

# Fig. 4

# Fig. 3

(a)

16
15
17
14
13
p
18
11
12
n⁺
19
p⁺
10

x

(b)

16
19
12
18
17

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5602932 A
- CH 690971
- US 3836254 A
- US 5521395 A
- EP 1624490 A1
- CH 690971 A5

**Non-patent literature cited in the description**

- Solid-State Image Sensing. **P. SEITZ.** Computer Vision and Applications - A Guide for Students and Practitioners. Academic Press, 2000, 111-152